# EUROPÄISCHE PATENTSCHRIFT

(11) **EP 1 495 235 B1**
(45) Veröffentlichungstag und Bekanntmachung des Hinweises auf die Patenterteilung: **29.10.2008**
(21) Anmeldenummer: 03720380.9
(22) Anmeldetag: 28.03.2003
(51) Int. Cl.: F16C 39/06, H02K 7/09

(54) **MAGNETFUEHRUNGSEINRICHTUNG**
MAGNETIC GUIDING DEVICE
DISPOSITIF DE GUIDAGE MAGNETIQUE

(30) Priorität: 12.04.2002 DE 10216421
(43) Veröffentlichungstag der Anmeldung: 12.01.2005
(73) Patentinhaber: Forschungszentrum Jülich GmbH, 52425 Jülich (DE)
(72) Erfinder: FREMEREY, Johan, K., 53127 Bonn (DE); LANG, Matthias, 02763 Zittau (DE)
(74) Vertreter: Paul, Dieter-Alfred
(86) Internationale Anmeldenummer: PCT/EP2003/003237
(87) Internationale Veröffentlichungsnummer: WO 2003/087602

(56) Entgegenhaltungen:
- EP-A- 0 844 410
- EP-A- 1 028 262
- WO-A-02/095899
- DE-A- 19 950 905
- US-A- 3 890 019
- US-A- 5 521 448

## Beschreibung

Die Erfindung betrifft eine Magnetführungseinrichtung mit wenigstens einem in axialer Richtung magnetisch zu führenden Element, z.B. einer Welle oder einem in axialer Richtung beweglichen Betätigungsglied, wobei das Element einen Radialsteg aus magnetisierbarem Material aufweist, der von einem einen Stator bildenden Axialjoch aus ferromagnetischem Material unter Bildung von Magnetspalten eingefaßt ist, in denen mittels einer Kombination aus Permanent- und Elektromagneten ein axialer Magnetfluß erzeugbar ist, über den die axiale Lage des Elements beeinflußbar ist, wobei in dem Axialjoch axial nebeneinander wenigstens ein Paar von axial entgegengesetzt polarisierten Permanentmagneten und ferner radial benachbart als Elektromagnet eine elektromagnetische Spule angeordnet sind, wobei der Magnetfluß in der Spule derart steuerbar ist, daß in den Magnetspalten ein asymmetrischer Magnetfluß mit einer Axialkraftresultierenden erzeugbar ist.

Magnetführungseinrichtungen sind in vielfacher Ausführung bekannt und können für unterschiedliche Zwecke eingesetzt werden. Ein Einsatzfeld besteht in der Lagerung von sich drehenden Wellen, beispielsweise in Vakuumpumpen, Fluidmeßgeräten, Blutpumpen, gyroskopischen Geräten oder Spinnrotoren. Ein weiteres Einsatzfeld sind Aktuatoren, bei denen ein bewegliches Betätigungsglied mittels Magnetkraft in axialer Richtung hin- und herbewegt werden kann, beispielsweise als Druckstempel, Antriebselement für kleine Wege, Schalter, Ventilbetätigung etc. Lediglich beispielhaft wird aus der Vielzahl der hierzu bekannt gewordenen Veröffentlichungen auf folgende Dokumente verwiesen: US-A-3,976,339; US-A-5,315,197; US-A-5,514,924; US-A-4,620,752; WO 92/15795; US-A-5,729,065; WO 00/64030; WO 00/64031.

Aus den Figuren 3 und 4 der US-A-5,315,197 und den Figuren 4 und 5 der US-A-5,514,924 sind Magnetführungseinrichtungen bekannt, die als zu führendes Element eine Welle aufweisen, die in axialer Richtung magnetisch geführt wird. Hierzu weisen die Wellen einen radial vorstehenden Ringsteg aus magnetisierbarem Material auf, der von einem einen Stator bildenden Axialjoch aus ferromagnetischem Material unter Bildung von Magnetspalten beidseitig eingefaßt wird. In dem Axialjoch sitzt mittig ein radial polarisierter, permanentmagnetischer Ringmagnet, der beidseitig von je einer Ringspule eines Elektromagneten flankiert ist. Hierdurch entstehen zwei in axialer Richtung nebeneinander liegende Magnetteilflüsse, die sich im Bereich des Ringmagneten vereinigen. In den Magnetspalten zwischen dem Ringsteg und dem Axialjoch wird ein axialer Magnetfluß erzeugt. Durch Steuerung des Stroms in den Ringspulen wird der Magnetfluß in den Magnetspalten so eingestellt, daß die Welle axial in dem Axialjoch zentriert wird. Abweichungen aus der Sollstellung werden von einem Magnetfeldsensor erfaßt, der Teil eines Reglers ist, der den Strom in den Ringspulen im oben genannten Sinn steuert.

Nachteilig bei diesen bekannten Magnetführungseinrichtungen ist, daß durch die radiale Polarisierung des Permanentmagneten erhebliche radiale Kräfte auf die Welle ausgeübt werden, die die Welle in radialer Richtung destabilisieren können. Außerdem ist der konstruktive Aufwand wegen der Anordnung von zwei räumlich getrennten elektrischen Spulen erheblich.

Bei einer gattungsgemäßen, als Rotorlager ausgebildeten Magnetführungseinrichtung nach der EP-A-0 844 410 sind in mehreren Axialjochen jeweils axial nebeneinander wenigstens ein Paar von axial entgegengesetzt polarisierten Permanentmagneten angeordnet, die durch ein mit dem jeweiligen Axialjoch verbundenen Flussleitsteg getrennt sind. Radial außenseitig benachbart zu jedem Permanentmagneten befindet sich jeweils ein als elektromagnetische Spule ausgebildeter Elektromagnet. Die insgesamt acht Elektromagnete sind derart steuerbar, daß ein asymmetrischer Magnetfluß mit einer Axialkraftresultierenden erzeugbar ist.

In der US-A-3,890,019 ist eine Magnetführungseinrichtung offenbart, bei der ein Radialsteg aus magnetisierbarem Material von einem Axialjoch aus ferromagnetischem Material eingefaßt ist. Außerhalb des Axialjochs sind ein Paar von axial entgegengesetzt polarisierten Permanentmagneten in Form von koaxial angeordneten Ringmagneten angebracht. Der außenliegende Teil des Axialjochs ist von einer elektromagnetischen Ringspule umgeben. Deren Magnetfluß ist so steuerbar, daß ein asymmetrischer Magnetfluß mit einer Axialkraftresultierenden erzeugbar und hierdurch die axiale Position des Radialstegs festlegbar ist.

Der Erfindung liegt die Aufgabe zugrunde, eine Magnetführungseinrichtung der eingangs genannten Art so auszubilden, daß Instabilitäten in radialer Richtung mit hoher Effizienz vermieden werden, und daß die Magnetführungseinrichtung konstruktiv wesentlich einfacher und damit kostengünstiger gestaltet werden kann.

Diese Aufgabe wird erfindungsgemäß dadurch gelöst, daß die Permanentmagnete aneinander anliegen. Mit der Kombination aus einem Paar von axial entgegengesetzt polarisierten, aneinanderliegenden Permanentmagneten und einer radial benachbart angeordneten Spule kann auf die Anordnung von zwei Spulen verzichtet werden. Die eine Spule reicht aus, um durch entsprechende Steuerung von Richtung und Stärke des Stroms den axialen Magnetfluß in den Magnetspalten im gewünschten Sinn zu beeinflussen, indem je nach Bedarf das Magnetfeld in dem einen Magnetspalt verstärkt und in dem anderen Magnetspalt abgeschwächt wird. Auf diese Weise kann auf den Radialsteg eine Axialkraft ausgeübt werden.

Durch die besondere Anordnung von Spule und Permanentmagnete werden in dem Axialjoch vier Magnetteilflüsse ausgebildet, von denen jeweils zwei axial und zwei radial nebeneinander liegen. Zwei der Magnetteilflüsse durchsetzen den Radialsteg und erzeugen in den Magnetspalten axial und entgegengesetzt gerichtete Magnetfelder. Die beiden anderen Magnetteilflüsse durchsetzen das Axialjoch nach außen hin. Es versteht sich, daß radial nebeneinander auch mehrere Permanentmagnete und/oder Spulen vorgesehen sein können.

Die erfindungsgemäße Magnetführungseinrichtung zeichnet sich durch geringe Instabilität in radialer Richtung sowie durch niedrigeren konstruktiven Aufwand aus, weil nur eine elektrische Spule notwendig ist. Außerdem wird die Kraft/Strom-Charakteristik der Spule nicht durch die Permanentmagnete beeinträchtigt.

Sofern die Magnetführungseinrichtung mit einem Regler versehen ist, wie er sich aus den oben genannten Dokumenten ergibt, kann die erfindungsgemäße Magnetführungseinrichtung als magnetisches Axiallager für Wellen verwendet werden, bei dem der Radialsteg in dem Axialjoch in einer einzigen definierten Stellung permanent axial zentriert ist. Zu dem Regler gehört dann ein Magnetflußsensor, der Axialbewegungen des zu führenden Elements, also der Welle, erfaßt und die Stromzufuhr zu der Spule so steuert, daß der Radialsteg und damit die Welle in dem Axialjoch im wesentlichen stationär gehalten wird. Zusätzliche Radiallager mechanischer oder magnetischer Art können dann für eine radiale Stabilisierung sorgen.

Wie schon oben erwähnt, eignen sich solche Magnetführungseinrichtungen aber auch dazu, Betätigungen durch Verschiebung des zu führenden Elements vorzunehmen, also die klassische Funktion eines Aktuators zu übernehmen. Hierzu ist zweckmäßigerweise eine Steuereinrichtung vorgesehen, über die das zu führende Element aus einer definierten Stellung axial hin- und zurückbewegbar ist. Die Steuereinrichtung kann auch mit der oben beschriebenen Regeleinrichtung in der Weise kombiniert werden, daß das Element in der definierten Stellung und auch während des gesamten Hubs schwebend gehalten wird, also der Hub nicht durch Anschläge begrenzt wird.

In weiterer Ausgestaltung der Erfindung ist vorgesehen, daß der Radialsteg als Ringsteg ausgebildet ist. Diese Ausführungsform ist insbesondere dann zweckmäßig, wenn die Magnetführungseinrichtung als Axiallager für eine Welle dient. Bei der Ausbildung als Ringsteg besteht die Möglichkeit, über den Umfang des Ringstegs verteilt mehrere Axialjoche der vorbeschriebenen Art anzuordnen. Konstruktiv einfacher ist es jedoch, das Axialjoch als Ringjoch auszubilden, das den Ringsteg umgibt. Dabei sind die Permanentmagnete zweckmäßigerweise als axial magnetisierte Ringmagnete und die Spule als Ringspule ausgebildet.

Um einen möglichst verlustfreien Magnetfluß zu erzeugen, sollte die Spule an dem Axialjoch und an den Permanentmagneten spaltlos anliegen. Damit verbleiben allein die Magnetspalte zwischen Radialsteg und Axialjoch.

Nach einem weiteren Merkmal der Erfindung ist vorgesehen, daß die Permanentmagnete der Umfangsseite des Radialstegs radial benachbart sind und die Spule radial außenseitig davon sitzt. Auf diese Weise ergibt sich ein besonders günstiger Magnetfluß.

Es versteht sich, daß das Element mehrere Radialstege in axialer Richtung hintereinander aufweisen kann und jeder Radialsteg dann von einem Axialjoch mit der erfindungsgemäßen Anordnung von Permanentmagneten und Spule eingefaßt ist.

Nach der Erfindung ist ferner vorgesehen, daß für das Element zusätzlich wenigstens ein vorzugsweise magnetisches Radiallager vorhanden ist. Ein solches Radiallager - auch mehrere davon - sind insbesondere dann sinnvoll, wenn eine Welle radial zentriert gehalten werden soll und Kippbeanspruchungen dieser Welle ausgeglichen werden sollen. Ein solches Radiallager kann aber auch zur Verbesserung der Führung eines Betätigungselements (Aktuators) vorgesehen werden.

Das magnetische Radiallager sollte jeweils einen auf der Welle sitzenden Lagerring und einen diesen an zumindest einer Seite axial gegenüberliegenden Radiallagerstator aufweisen, wobei Permanentmagnete sowohl im Lagerring als auch im Radiallagerstator vorgesehen sind. Dabei sollten in radialer Richtung mehrere Permanentmagnete nebeneinander angeordnet sein, die zweckmäßigerweise aneinander anliegen und abwechselnd entgegengesetzt polarisiert sind, d.h. daß jeweils zwei benachbarte Permanentmagnete am Radiallagerstator oder am Lagerring entgegengesetzt polarisiert sind. Hierdurch werden besonders hohen Magnetkräfte erzeugt.

Grundsätzlich besteht die Möglichkeit, daß die Radiallagerstatoren über den Umfang verteilt mehrere Teilstatoren mit Permanentmagneten aufweisen. Konstruktiv einfacher ist es jedoch, den Radiallagerstator als Ringstator und die Permanentmagnete als Ringmagnete auszubilden.

Es reicht aus, daß jedem Lagerring nur an einer Seite ein Radiallagerstator zugeordnet ist. Dabei kann der Radiallagerstator so angeordnet und ausgebildet sein, daß permanent eine Axialkraft in einer Richtung erzeugt wird. Dies kann auch mit einer Ausführungsform geschehen, bei der der Lagerring an beiden Seiten von Radiallagerstatoren mit Permanentmagneten eingefaßt ist. Auf diese Weise läßt sich ein besonders kräftiger Magnetfluß erzielen, der einer radialen Auslenkung der Welle entgegenwirkt. Es versteht sich, daß mehrere Radiallager vorgesehen sein können, die insoweit auch unterschiedlich gestaltet sind, d.h. daß der Lagerring des einen Radiallagers nur auf einer Seite einen Radiallagerstator aufweist, während der Lagerring des anderen Radiallagers auf beiden Seiten Radiallagerstatoren hat. Ebenso versteht es sich, daß innerhalb eines Radiallagers auch mehrere Lagerringe mit einer entsprechenden Anzahl von Radiallagerstatoren vorgesehen werden können. In diesem Fall handelt es sich lediglich um eine Reihenanordnung von mehreren Radiallagern.

Soweit zwei Radiallagerstatoren in einem Radiallager vorgesehen sind, sollten sie zweckmäßigerweise zu einem im Querschnitt U-förmigen Joch vereint sein.

Magnetlager haben die Eigenschaft, daß sie nahezu keine Dämpfung bewirken. Nach der Erfindung ist deshalb vorgesehen, daß wenigstens ein Radiallagerstator, vorzugsweise alle Radiallagerstatoren, über Feder- und Dämpferelemente radial beweglich an einem gehäusefesten Teil der Magnetführungseinrichtung gelagert sind. Dies kann beispielsweise mittels sich axial erstreckender Biegefedern geschehen, wobei der Radiallagerstator über mehrere, über den Umfang verteilte Biegefedern mit dem gehäusefesten Teil verbunden sein kann. Dabei können die Biegefedern jeweils Teil eines Käfigs sein, der die Enden der Biegefedern über Käfigringe verbindet und einerends mit dem Radiallagerstator und andererends mit dem gehäusefesten Teil gekoppelt ist. Um eine platzsparende Ausgestaltung zu erhalten, sollte der Käfig den jeweils zugehörigen Radiallagerstator umgeben. Zusätzlich ist es zweckmäßig, daß sich der an Federelementen aufgehängte Radiallagerstator über wenigstens ein Dämpfungselement an dem gehäusefesten Teil abstützt, das die radialen Auslenkungen der Federelemente dämpft. Dabei kann das Dämpfungselement jeweils ringförmig und koaxial zur Welle ausgebildet und entweder auf Druck oder auf Scherung beansprucht sein. In besonderer Ausgestaltung ist das Dämpfungselement als Flüssigkeitsfilm ausgebildet, vorzugsweise mit magnetischen oder magnetisierbaren Partikeln versehen, wobei der Flüssigkeitsfilm an wenigstens einer Seite über einen Permanentmagneten magnetisch beaufschlagt wird, der Teil des passiven Magnetlagers sein kann. Auf diese Weise wird der Flüssigkeitsfilm magnetisch eingefangen. Die Viskosität des Flüssigkeitsfilms kann den jeweiligen Anforderungen an die Dämpfung angepaßt werden.

In der Zeichnung ist die Erfindung anhand eines Ausführungsbeispiels näher veranschaulicht. Es zeigen:
- Figur 1: die Seitenansicht eine vollmagnetischen Wellenlagerung mit Teilschnittdarstellung des oberen Teils;
- Figur 2: einen Querschnitt durch ein Radiallager der Wellenlagerung gemäß Figur 1;
- Figur 3: eine perspektivische Darstellung eines Federkäfigs für das Radiallager gemäß Figur 2;
- Figur 4: eine vergrößerte Darstellung des Axiallagers der Wellenlagerung gemäß Figur 1 und
- Figur 5: das Axiallager gemäß Figur 4 mit aktiver Beeinflussung des Magnetflusses.

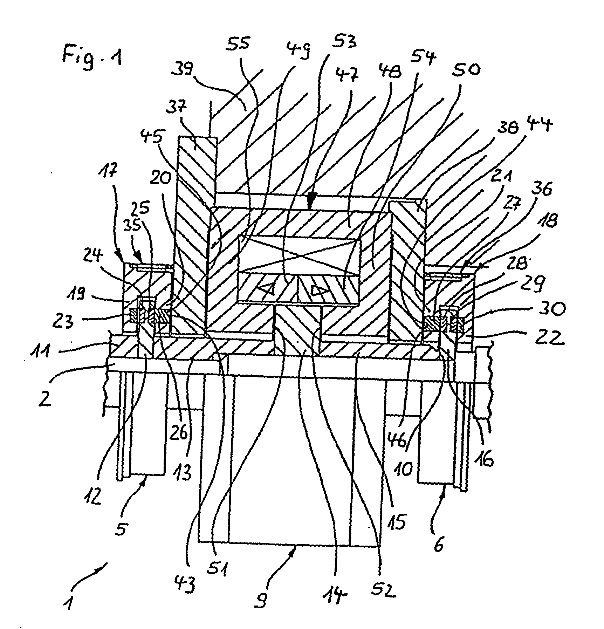

Die in Figur 1 dargestellte Wellenlagerung 1 weist eine Welle 2 auf, die in zwei Radiallagern 5, 6 und einem dazwischen angeordneten Axiallager 9 gelagert ist.

Wie sich aus dem oberen Teil von Figur 1 ersehen läßt, ist die Welle 2 von insgesamt sechs Ringen umgeben, die gegen einen Bund 10 an der Welle 2 axial verspannt sind. Auf eine erste Wellenhülse 11 mit der Nut 7 folgt eine Lagerscheibe 12, eine zweite Wellenhülse 13, eine Lagerscheibe 14, eine dritte Wellenhülse 15 und eine weitere Lagerscheibe 16.

Die Lagerscheiben 12, 16 gehören zu den Radiallagern 5, 6. Sie werden jeweils beidseitig durch ein im Querschnitt U-förmiges, die Welle 2 koaxial umgebendes Radialjoch 17, 18 eingefaßt, wobei jedes Radialjoch 17, 18 ein Paar von Radiallagerstatoren 19, 20 bzw. 21, 22 aufweist, die die Schenkel der Radialjoche 17, 18 bilden. Die Radiallagerstatoren 19, 20, 21, 22 und die Lagerscheiben 12, 16 weisen Permanentmagnete 23, 24, 25, 26 bzw. 27, 28, 29, 30 auf, die sich in den beiden Radiallagern 5, 6 jeweils in axialer Richtung gegenüber stehen. Sie sind so polarisiert, daß sie sich jeweils anziehen, so daß sich in den Spalten zwischen den Lagerscheiben 12, 16 und den Radiallagerstatoren 19, 20, 21, 22 ein axial gerichtetes und attrahierendes Magnetfeld ergibt. Die Magnetfelder zentrieren die Welle 2.

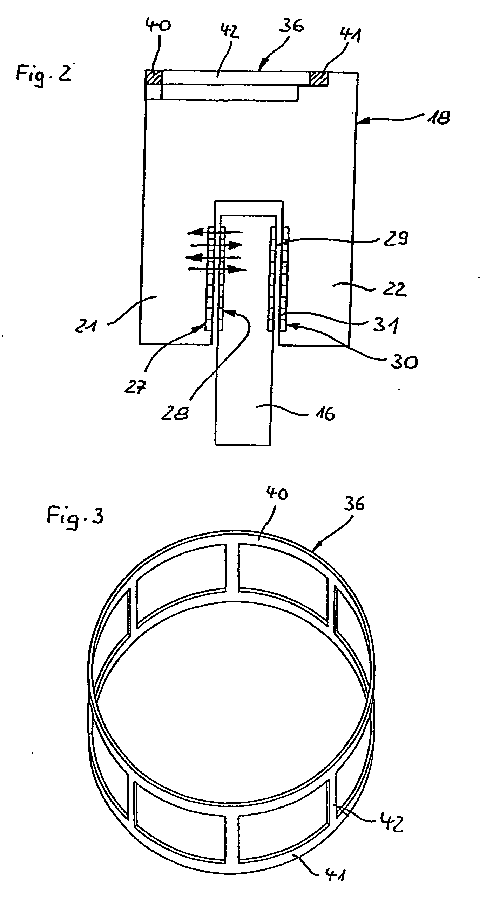

Die Permanentmagnete 23 bis 30 bestehen jeweils aus neun koaxial ineinander gesetzten Ringmagneten - beispielhaft mit 31 bezeichnet -, wie aus der vergrößerten Darstellung des Radiallagers 6 in Figur 2 zu ersehen ist. Die Ringmagnete 31 eines Permanentmagneten 23 bis 30 liegen in radialer Richtung aneinander an. Zwei in radialer Richtung benachbarte Ringmagnete 31 sind entgegengesetzt axial magnetisiert. Die in axialer Richtung gegenüberliegenden Ringmagnete 31 von zwei benachbarten Permanentmagneten 23 bis 30 sind sich gegenseitig anziehend polarisiert, so daß ein axialer Magnetfluß entsteht.

Die Radialjoche 17, 18 werden außenseitig von Federkäfigen 35, 36 umgeben (im unteren Teil von Figur 1 weggelassen) die am außenseitigen Rand mit den Radialjochen 17, 18 und am innenseitigen Rand mit Gehäusescheiben 37, 38 (im unteren Teil von Figur 1 weggelassen) verbunden sind, welche wiederum an einem Gehäuse 39 fixiert sind. Der Federkäfig 36 ist in Figur 3 im einzelnen dargestellt. Randseitig hat er zwei Käfigringe 40, 41, die über acht gleichmäßig verteilte, sich in Axialrichtung erstreckende Federstreben - beispielhaft mit 42 bezeichnet - verbunden sind. Die Federstreben 42 erlauben eine gegenseitige Parallelverschiebung der beiden Käfigringe 40, 41, wobei sich die Federstreben 42 in radialer Richtung verbiegen. Die Radialjoche 17, 18 können also radial auslenken.

Zwischen den Radialjochen 17, 18 und den Gehäusescheiben 37, 38 befinden sich schmale Spalte, in denen jeweils ein Dämpfungsring 43, 44 vorgesehen ist (Figur 1). Die Dämpfungsringe 43, 44 bestehen aus einem hochviskosen und mit magnetischen Partikeln versetzten Flüssigkeitsfilm. Der Flüssigkeitsfilm wird bei einer radialen Bewegung der Radialjoche 17, 18 auf Scherung beansprucht und wirkt auf diese Weise dämpfend. Er wird durch Ringmagnete 45, 46 in den Radialjochen 17, 18 eingefangen.

Die Lagerscheibe 14 gehört zu dem Axiallager 9. Sie wird beidseitig von einem Ringjoch 47 aus geblechtem Si-Eisen eingefaßt. Das Ringjoch 47 ist zwischen den beiden Gehäusescheiben 37, 38 eingefaßt und fixiert. Es hat einen äußeren Jochmantel 48, von dem zwei nach innen gerichtete Jochschenkel 49, 50 ausgehen, die L-förmigen Querschnitt haben und die Lagerscheibe 14 mit gegeneinander gerichteten Schenkelabschnitten einfassen, wobei zwei Magnetspalte 51, 52 entstehen. Der Umfangsseite der Lagerscheibe 14 benachbart befinden sich innerhalb des Ringjochs 47 zwei axial nebeneinander liegende Permanentmagnete 53, 54, welche - symbolisiert durch die Dreiecke - entgegengesetzt axial polarisiert sind. Sie liegen aneinander und an den Jochschenkeln 49, 50 an. Sie werden von einer elektromagnetischen Ringspule 55 umgeben, die den Raum zwischen den Permanentmagneten 53, 54 sowie dem Jochmantel 48 und den Jochschenkeln 49, 50 ausfüllt.

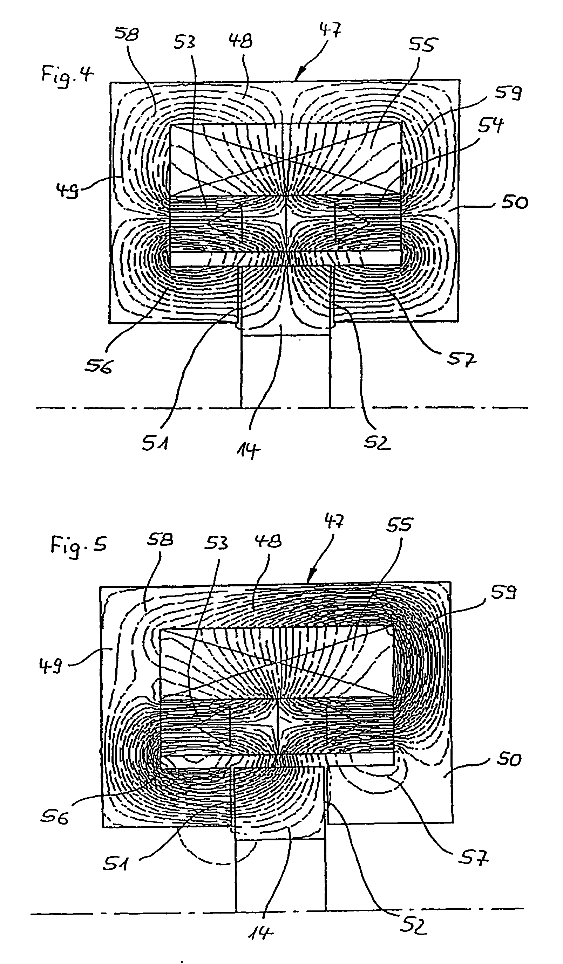

Wie insbesondere aus Figur 4 zu ersehen ist, werden durch die beiden Permanentmagnete 53, 54 insgesamt vier Magnetteilflüsse 56, 57, 58, 59 erzeugt, wobei jeweils benachbarte Magnetteilflüsse 56, 57, 58, 59 entgegengesetzt gerichtet sind. Die innenseitigen Magnetteilflüsse 56, 57 bilden in den Magnetspalten 51, 52 axial gerichtete Magnetflüsse aus, so daß sich die einander gegenüber liegenden Flächen in den Magnetspalten 51, 52 gegenseitig anziehen. In der Mittellage der Lagerscheibe 14 heben sich die Magnetkräfte auf. Die außenseitigen Magnetteilflüsse 58, 59 gehen über die Jochschenkel 49, 50 in den Jochmantel 48 und von dort über die Ringspule 55 wieder in die Ringmagnete 45, 46.

Aufgrund der magnetischen Instabilität der Welle 2 in axialer Richtung muß über das Axiallager 9 eine axiale Stabilisierung bewirkt werden. Dies geschieht bei einer axialen Auslenkung der Lagerscheibe 14 dadurch, daß diese Auslenkung von einem hier nicht näher dargestellten, im Stand der Technik bekannten Sensor erfaßt wird und hierdurch der ebenfalls nicht dargestellte Regler den Stromzufluß zu der Ringspule 55 so steuert, daß ein zusätzlicher Magnetfluß erzeugt wird, der insgesamt zu einer asymmetrischen Magnetflußverteilung innerhalb des Axiallagers 9 führt. Dies ist aus Figur 5 zu ersehen. In diesem Fall liegt eine minimale Auslenkung der Lagerscheibe 14 nach rechts vor. Hierdurch wird die Ringspule 55 durch einen elektrischen Strom beaufschlagt, der eine solche Richtung hat, daß die diagonal gegenüber liegenden Magnetteilflüsse 56, 59 verstärkt - symbolisiert durch die dichteren Flußlinien - und die anderen Magnetteilflüsse 57, 58 abgeschwächt werden. Hierdurch erhöht sich die anziehende Kraft im linken Magnetspalt 51, während sich die Magnetkraft im rechten Magnetspalt 52 abschwächt. Der axialen Auslenkung der Lagerscheibe 14 nach rechts wird also eine magnetische Anziehungskraft in axialer Richtung entgegengesetzt mit der Folge, daß die Lagerscheibe 14 in Bezug auf das Ringjoch 47 wieder zentriert wird.

Das in den Figuren 4 und 5 dargestellte Axiallager 47 kann auch aus der Wellenlagerung 1 herausgelöst verwendet werden, beispielsweise wenn die Welle 2 magnetisch nur in axialer Richtung stabilisiert werden soll und in radialer Richtung mittels Gleit- oder Wälzlagern gelagert ist. Des weiteren kann das Axiallager 47 auch als Aktuator eingesetzt werden, wenn die Welle 2 beispielsweise als Stempel ausgebildet wird. Der Stempel kann wie die Welle 2 in der Wellenlagerung 1 vollmagnetisch in einer Schwebelage gehalten werden. Es besteht jedoch auch die Möglichkeit, den Stempel axial beweglich über mechanische Lagerlateralführungen zu lagern.

Innerhalb der Breite der Magnetspalte 51, 52 kann die Lagerscheibe 14 und damit der Stempel axial versetzt werden, indem die Spule 55 mit einem entsprechend gerichteten elektrischen Strom beaufschlagt wird. Dabei können die Stirnseiten der Jochschenkel 49, 50 als Anschläge dienen. Durch entsprechende Steuerung des auf die Spule 55 wirkenden Stroms kann die Lagerscheibe 14 auch zwischen zwei magnetisch definierten Stellungen axial versetzt werden, so daß ein Anschlagen an den Jochschenkeln 49, 50 vermieden wird. Der Stempel kann beispielsweise zur Betätigung von elektrischen Schaltern, als Druck- oder Prägestempel etc. verwendet werden.

## Patentansprüche

1. Magnetführungseinrichtung (1) mit wenigstens einem in axialer Richtung magnetisch zu führenden Element (2), z.B. einer Welle oder einem in axialer Richtung beweglichen Betätigungsglied, wobei das Element (2) einen Radialsteg (14) aus magnetisierbarem Material aufweist, der von einem einen Stator bildenden Axial joch (47) aus ferromagnetischem Material unter Bildung von Magnetspalten (51, 52) eingefaßt ist, in denen mittels einer Kombination aus Permanent- und Elektromagneten (53, 54, 55) ein axialer Magnetfluß erzeugbar ist, über den die axiale Lage des Elements (2) beeinflußbar ist, wobei in dem Axialjoch (47) axial nebeneinander wenigstens ein Paar von axial entgegengesetzt polarisierten Permanentmagneten (53, 54) und ferner radial benachbart als Elektromagnet eine elektromagnetische Spule (55) angeordnet sind, wobei der Magnetfluß in der Spule (55) derart steuerbar ist, daß in den Magnetspalten (51, 52) ein asymmetrischer Magnetfluß mit einer Axialkraftresultierenden erzeugbar ist, **dadurch gekennzeichnet, daß** die Permanentmagnete (53, 54) aneinander anliegen.

2. Magnetführungseinrichtung nach Anspruch 1, **dadurch gekennzeichnet, daß** ein Regler vorhanden ist, der derart ausgebildet ist, daß der Radialsteg (14) in dem Axialjoch (47) in einer einzigen definierten Stellung permanent axial zentriert ist.

3. Magnetführungseinrichtung nach Anspruch 1 oder 2, **dadurch gekennzeichnet, daß** eine Steuereinrichtung vorgesehen ist, über die das Element (2) aus einer definierten Stellung axial hin- und zurückbewegbar ist.

4. Magnetführungseinrichtung nach einem der Ansprüche 1 bis 3, **dadurch gekennzeichnet, daß** der Radialsteg als Ringsteg (14) ausgebildet ist.

5. Magnetführungseinrichtung nach Anspruch 4, **dadurch gekennzeichnet, daß** über den Umfang verteilt mehrere Axialjoche (47) vorgesehen sind.

6. Magnetführungseinrichtung nach Anspruch 4, **dadurch gekennzeichnet, daß** das Axialjoch als Ringjoch (47) ausgebildet ist, das den Ringsteg umgibt.

7. Magnetführungseinrichtung nach Anspruch 6, **dadurch gekennzeichnet, daß** die Permanentmagnete (53, 54) als Ringmagnete und die Spule (55) als Ringspule ausgebildet sind.

8. Magnetführungseinrichtung nach einem der Ansprüche 1 bis 7, **dadurch gekennzeichnet, daß** die Permanentmagnete (53, 54) an dem Axialjoch (47) anliegen.

9. Magnetführungseinrichtung nach einem der Ansprüche 1 bis 8, **dadurch gekennzeichnet, daß** die Spule (35) an dem Axialjoch (47) anliegt.

10. Magnetführungseinrichtung nach einem der Ansprüche 1 bis 9, **dadurch gekennzeichnet, daß** die Spule (55) an den Permanentmagneten (53, 54) anliegt.

11. Magnetführungseinrichtung nach einem der Ansprüche 1 bis 10, **dadurch gekennzeichnet, daß** die Permanentmagnete (53, 54) radial der Umfangsseite des Lagerrings (14) benachbart sind und die Spule (55) radial außenseitig davon sitzt.

12. Magnetführungseinrichtung nach einem der Ansprüche 1 bis 11, **dadurch gekennzeichnet, daß** das Element mehrere Radialstege in axialer Richtung hintereinander aufweist und jeder Radialsteg von einem Axialjoch eingefaßt ist.

13. Magnetführungseinrichtung nach einem der Ansprüche 1 bis 12, **dadurch gekennzeichnet, daß** für das Element (2) zusätzlich wenigstens ein Radiallager (5, 6) vorhanden ist.

14. Magnetführungseinrichtung nach Anspruch 13, **dadurch gekennzeichnet, daß** das Radiallager (5, 6) einen auf der Welle sitzenden Lagerring (12, 16) und wenigstens einen diesen an zumindest einer Seite axial gegenüberliegenden Radiallagerstator (19 bis 22) aufweist, wobei Permanentmagnete (23 bis 31) sowohl an den Lagerringen als auch an den Radiallagerstatoren (19 bis 22) vorgesehen sind.

15. Magnetführungseinrichtung nach Anspruch 14, **dadurch gekennzeichnet, daß** in radialer Richtung mehrere Permanentmagnete (23 bis 31) nebeneinander angeordnet sind.

16. Magnetführungseinrichtung nach Anspruch 15, **dadurch gekennzeichnet, daß** die Permanentmagnete (23 bis 31) an Radiallagerstator (19 bis 22) und Lagerring in radialer Richtung aneinander anliegen.

17. Magnetführungseinrichtung nach Anspruch 15 oder 16, **dadurch gekennzeichnet, daß** in radialer Richtung jeweils zwei benachbarte Permanentmagnete (19 bis 22) entgegengesetzt polarisiert sind.

18. Magnetführungseinrichtung nach einem der Ansprüche 14 bis 17, **dadurch gekennzeichnet, daß** der Radiallagerstator (19 bis 22) über den Umfang verteilt mehrere Teilstatoren mit Permanentmagneten (23 bis 31) aufweist.

19. Magnetführungseinrichtung nach einem der Ansprüche 14 bis 18, **dadurch gekennzeichnet, daß** der Radiallagerstator (19 bis 22) als Ringstator und die Permanentmagnete (23 bis 31) als Ringmagnete ausgebildet sind.

20. Magnetführungseinrichtung nach einem der Ansprüche 14 bis 19, **dadurch gekennzeichnet, daß** jeweils der Lagerring (12, 16) an beiden Seiten von Radiallagerstatoren (19 bis 22) eingefaßt ist.

21. Magnetführungseinrichtung nach Anspruch 20, **dadurch gekennzeichnet, daß** jeweils zwei Radiallagerstatoren (19 bis 22) zu einem im Querschnitt U-förmigen Radialjoch (17, 18) vereint sind.

22. Magnetführungseinrichtung nach einem der Ansprüche 14 bis 21, **dadurch gekennzeichnet, daß** wenigstens ein Radiallagerstator (19 bis 22) über Feder- und Dämpferelemente (35, 36; 40 bis 44) an einem gehäusefesten Teil (37, 38, 39) der Magnetführungseinrichtung (1) gelagert ist.

23. Magnetführungseinrichtung nach Anspruch 22, **dadurch gekennzeichnet, daß** die Federelemente (35, 36; 40, 41, 42) als sich axial erstreckende Biegefedern (42) ausgebildet sind.

24. Magnetführungseinrichtung nach Anspruch 23, **dadurch gekennzeichnet, daß** jeder Radiallagerstator (19 bis 22) über mehrere, über den Umfang verteilte Biegefedern (42) mit dem gehäusefesten Teil (37, 38, 39) verbunden ist.

25. Magnetführungseinrichtung nach Anspruch 24, **dadurch gekennzeichnet, daß** die Biegefedern (42) jeweils Teil eines Käfigs (35, 36) sind, der die Enden der Biegefedern (42) über Käfigringe (40, 41) verbindet.

26. Magnetführungseinrichtung nach Anspruch 25, **dadurch gekennzeichnet, daß** der Käfig (35, 36) jeweils die Radiallagerstatoren (19 bis 22) umgibt.

27. Magnetführungseinrichtung nach einem der Ansprüche 22 bis 26, **dadurch gekennzeichnet, daß** der bzw. die Radiallagerstatoren (19 bis 22) sich über wenigstens ein Dämpfungselement (43, 44) an dem gehäusefesten Teil (37, 38, 39) abstützen.

28. Magnetführungseinrichtung nach Anspruch 27, **dadurch gekennzeichnet, daß** das Dämpfungselement (43, 44) ringförmig und koaxial zum Element (2) ausgebildet ist.

29. Magnetführungseinrichtung nach Anspruch 27 oder 28, **dadurch gekennzeichnet, daß** die Dämpfungselemente (43, 44) als Flüssigkeitsfilme ausgebildet sind.

30. Magnetführungseinrichtung nach Anspruch 29, **dadurch gekennzeichnet, daß** die Flüssigkeitsfilme (43, 44) magnetisch oder magnetisierbare Partikel enthalten und wenigstens an einer Seite über einen Permanentmagneten (45, 46) magnetisch beaufschlagt sind.

31. Magnetführungseinrichtung nach Anspruch 30, **dadurch gekennzeichnet, daß** die Permanentmagnete (45, 46) Teil des bzw. der Radiallager (5, 6) sind.

## Claims

1. A magnetic guiding device (1) having at least one element (2) to be guided magnetically in the axial direction, e.g. a shaft or an actuation member that is movable in the axial direction, the element (2) having a radial flange (14) made of magnetizable material that is enclosed by an axial yoke (47) made of ferromagnetic material and constituting a stator, forming magnet gaps (51, 52) in which is producible, by means of a combination of permanent magnets and electromagnets (53, 54, 55), an axial magnetic flux with which the axial position of the element (2) can be influenced, wherein in the axial yoke (47), at least one pair of axially oppositely polarized permanent magnets (53, 54) are arranged axially next to one another, and an electromagnetic coil (55) is moreover arranged radially adjacently as an electromagnet, the magnetic flux in the coil (55) being controllable in such a way that an asymmetrical magnetic flux having an axial resultant force is producible in the magnet gaps (51, 52), **characterized in that** the permanent magnets (53, 54) are in contact against one another.

2. The magnetic guiding device as defined in Claim 1, **characterized in that** a controller is present that is embodied such that the radial flange (14) is permanently axially centered in the axial yoke (47) in a single defined position.

3. The magnetic guiding device as defined in Claim 1 or 2, **characterized in that** a control device is provided with which the element (2) is movable axially back and forth out of a defined position.

4. The magnetic guiding device as defined in any of Claims 1 through 3, **characterized in that** the radial flange is embodied as an annular flange (14).

5. The magnetic guiding device as defined in Claim 4, **characterized in that** several axial yokes (47), distributed around the circumference, are provided.

6. The magnetic guiding device as defined in Claim 4, **characterized in that** the axial yoke is embodied as an annular yoke (47) that surrounds the annular flange.

7. The magnetic guiding device as defined in Claim 6, **characterized in that** the permanent magnets (52, 54) are embodied as annular magnets, and the coil (55) as an annular coil.

8. The magnetic guiding device as defined in any of Claims 1 through 7, **characterized in that** the permanent magnets (53, 54) are in contact against the axial yoke (47).

9. The magnetic guiding device as defined in any of Claims 1 through 8, **characterized in that** the coil (35) is in contact against the axial yoke (47).

10. The magnetic guiding device as defined in any of Claims 1 through 9, **characterized in that** the coil (55) is in contact against the permanent magnets (53, 54).

11. The magnetic guiding device as defined in any of Claims 1 through 10, **characterized in that** the permanent magnets (53, 54) are radially adjacent to the circumferential side of the bearing ring (14), and the coil (55) sits radially externally therefrom.

12. The magnetic guiding device as defined in any of Claims 1 through 11, **characterized in that** the element comprises several radial flanges one behind another in the axial direction, and each radial flange is enclosed by an axial yoke.

13. The magnetic guiding device as defined in any of Claims 1 through 12, **characterized in that** at least one radial bearing (5, 6) is additionally present for the element (2).

14. The magnetic guiding device as defined in Claim 13, **characterized in that** the radial bearing (5, 6) comprises a bearing ring (12, 16) sitting on the shaft, and at least one radial bearing stator (19 through 22) axially opposite that ring on at least one side, permanent magnets (23 through 31) being provided both on the bearing rings and on the radial bearing stators (19 through 22).

15. The magnetic guiding device as defined in Claim 14, **characterized in that** several permanent magnets (23 through 31) are arranged next to one another in the radial direction.

16. The magnetic guiding device as defined in Claim 15, **characterized in that** the permanent magnets (23 through 31) are in contact with one another against the radial bearing stator (19 through 22) and the bearing ring in the radial direction.

17. The magnetic guiding device as defined in Claim 15 or 16, **characterized in that** in the radial direction, each two adjacent permanent magnets (19 through 22) are oppositely polarized.

18. The magnetic guiding device as defined in any of Claims 14 through 17, the radial bearing stator (19 through 22) comprises several substators distributed over the circumference and having permanent magnets (23 through 31).

19. The magnetic guiding device as defined in any of Claims 14 through 18, **characterized in that** the radial bearing stator (19 through 22) is embodied as an annular stator, and the permanent magnets (23 through 31) as annular magnets.

20. The magnetic guiding device as defined in any of Claims 14 through 19, **characterized in that** the bearing ring (12, 16) is respectively enclosed on both sides by radial bearing stators (19 through 22).

21. The magnetic guiding device as defined in Claim 20, **characterized in that** each two radial bearing stators (19 through 22) are combined into one radial yoke (17, 18) that is U-shaped in cross section.

22. The magnetic guiding device as defined in any of Claims 14 through 21, **characterized in that** at least one radial bearing stator (19 through 22) is supported via spring and damper elements (35, 36; 40 through 44) on a housing-mounted part (37, 38, 39) of the magnetic guiding device (1).

23. The magnetic guiding device as defined in Claim 22, **characterized in that** the spring elements (35, 36; 40, 41, 42) are embodied as axially extending flexural springs (42).

24. The magnetic guiding device as defined in Claim 23, **characterized in that** each radial bearing stator (19 through 22) is connected to the housing-mounted part (37, 38, 39) via several flexural springs (42) distributed over the circumference.

25. The magnetic guiding device as defined in Claim 24, **characterized in that** the flexural springs (42) are each part of a cage (35, 36) that connects the ends of the flexural springs (42) via cage rings (40, 41).

26. The magnetic guiding device as defined in Claim 25, **characterized in that** the cage (35, 36) surrounds the respective radial bearing stators (19 through 22).

27. The magnetic guiding device as defined in any of Claims 22 through 26, **characterized in that** the radial bearing stator or stators (19 through 22) are braced via at least one damping element (43, 44) against the housing-mounted part (37, 38, 39).

28. The magnetic guiding device as defined in Claim 27, **characterized in that** the damping element (43, 44) is embodied annularly and coaxially with respect to the element (2).

29. The magnetic guiding device as defined in Claim 27 or 28, **characterized in that** the damping elements (43, 44) are embodied as liquid films.

30. The magnetic guiding device as defined in Claim 29, **characterized in that** the liquid films (43, 44) contain magnetic or magnetizable particles and are magnetically impinged upon on at least one side via a permanent magnet (45, 46).

31. The magnetic guiding device as defined in Claim 30, **characterized in that** the permanent magnets (45, 46) are part of the radial bearing or bearings (5, 6).

## Revendications

1. Dispositif de guidage magnétique (1) comprenant au moins un élément (2) à guider magnétiquement en direction axiale, par exemple un arbre ou un organe d'actionnement mobile en direction axiale, l'élément (2) présentant une branche radiale (14) en matériau magnétisable qui est entourée par une culasse axiale (47) en matériau ferromagnétique, formant un stator avec formation d'entrefers (51, 52) dans lesquels, au moyen d'une combinaison d'aimants permanents et d'électroaimants (53, 54, 55), peut être généré un flux magnétique axial par l'intermédiaire duquel la longueur axiale de l'élément (2) peut être influencée, au moins une paire d'aimants permanents (53, 54) polarisés en sens contraire axialement et, plus loin radialement de manière adjacente, une bobine électromagnétique (55) en guise d'électroaimant étant juxtaposées axialement dans la culasse axiale (47), le flux magnétique dans la bobine (55) pouvant être commandé de manière qu'un flux magnétique asymétrique avec une résultante de force axiale puisse être généré dans les entrefers (51, 52), **caractérisé en ce que** les aimants permanents (53, 54) sont appliqués l'un contre l'autre.

2. Dispositif de guidage magnétique selon la revendication 1, **caractérisé en ce qu'**il est prévu un régulateur qui est réalisé de manière que la branche radiale (14) dans la culasse axiale (47) soit centrée axialement de façon permanente dans une seule position définie.

3. Dispositif de guidage magnétique selon la revendication 1 ou 2, **caractérisé en ce qu'**il est prévu un dispositif de commande par l'intermédiaire duquel l'élément (2) peut être amené à effectuer des mouvements d'aller et de retour axiaux à partir d'une position définie.

4. Dispositif de guidage magnétique selon l'une des revendications 1 à 3, **caractérisé en ce que** la branche radiale est réalisée sous forme de branche annulaire (14).

5. Dispositif de guidage magnétique selon la revendication 4, **caractérisé en ce que** plusieurs culasses axiales (47) répartie sur la périphérie sont prévues.

6. Dispositif de guidage magnétique selon la revendication 4, **caractérisé en ce que** la culasse axiale est réalisée sous forme de culasse annulaire (47) qui entoure la branche annulaire.

7. Dispositif de guidage magnétique selon la revendication 6, **caractérisé en ce que** les aimants permanents (53, 34) sont réalisés sous forme d'aimants toriques et la bobine (55) sous la forme d'une bobine toroïdale.

8. Dispositif de guidage magnétique selon l'une des revendications 1 à 7, **caractérisé en ce que** les aimants permanents (53, 54) sont appliqués contre la culasse axiale (47).

9. Dispositif de guidage magnétique selon l'une des revendications 1 à 8, **caractérisé en ce que** la bobine (35) est appliquée contre la culasse axiale (47).

10. Dispositif de guidage magnétique selon l'une des revendications 1 à 9, **caractérisé en ce que** la bobine (55) est appliquée contre les aimants permanents (53, 54).

11. Dispositif de guidage magnétique selon l'une des revendications 1 à 10, **caractérisé en ce que** les aimants permanents (53, 54) sont radialement adjacents au côté périphérique de la bague de palier (14) et la bobine (55) située radialement extérieurement à celui-ci.

12. Dispositif de guidage magnétique selon l'une des revendications 1 à 11, **caractérisé en ce que** l'élément présente plusieurs branches radiales les unes derrière les autres en direction axiale et chaque branche radiale est entourée par ou enchâssée dans une culasse axiale.

13. Dispositif de guidage magnétique selon l'une des revendications 1 à 12, **caractérisé en ce qu'**au moins un palier radial (5, 6) est prévu en plus pour l'élément (2).

14. Dispositif de guidage magnétique selon la revendication 13, **caractérisé en ce que** le palier radial (5, 6) présente une bague de palier (12, 16) montée sur l'arbre et au moins un stator de palier radial (19 à 22) situé axialement en face de celle-ci au moins sur un côté, des aimants permanents (23 à 31) étant prévus aussi bien sur les bagues de palier que sur les stators de palier radial (19 à 22).

15. Dispositif de guidage magnétique selon la revendication 14, **caractérisé en ce que** plusieurs aimants permanents (23 à 31) sont disposés les uns à côté des autres en direction radiale.

16. Dispositif de guidage magnétique selon la revendication 15, **caractérisé en ce que** les aimants permanents (23 à 31) sur le stator de palier radial (19 à 22) et la bague de palier sont appliqués les uns contre les autres en direction radiale.

17. Dispositif de guidage magnétique selon la revendication 15 ou 16, **caractérisé en ce que** deux aimants permanents (19 à 22) adjacents en direction radiale sont chaque fois polarisés en sens contraire.

18. Dispositif de guidage magnétique selon l'une des revendications 14 à 17, **caractérisé en ce que** le stator de palier radial (19 à 22) présente plusieurs stators partiels avec des aimants permanents (23 à 31) répartis sur la circonférence.

19. Dispositif de guidage magnétique selon l'une des revendications 14 à 18, **caractérisé en ce que** le stator de palier radial (19 à 22) est réalisé sous forme de stator annulaire et les aimants permanents (23 à 31) sous forme d'aimants toriques.

20. Dispositif de guidage magnétique selon l'une des revendications 14 à 19, **caractérisé en ce que** chaque bague de palier (12, 16) est entourée des deux côtés par des stators de palier radial (19 à 22).

21. Dispositif de guidage magnétique selon la revendication 20, **caractérisé en ce que** deux stators de palier radial (19 à 22) sont chaque fois réunis en une culasse radiale (17, 18) en forme de U en section.

22. Dispositif de guidage magnétique selon l'une des revendications 14 à 21, **caractérisé en ce qu'**au moins un stator de palier radial (19 à 22) est monté par l'intermédiaire d'éléments élastiques et amortisseurs (35, 36 ; 40 à 44) sur une partie (37, 38, 39) solidaire du carter du dispositif de guidage magnétique (1).

23. Dispositif de guidage magnétique selon la revendication 22, **caractérisé en ce que** les éléments élastiques (35, 36 ; 40, 41, 42) sont réalisés sous forme de ressorts de flexion (42) s'étendant axialement.

24. Dispositif de guidage magnétique selon la revendication 23, **caractérisé en ce que** chaque stator de palier radial (19 à 22) est relié à la partie (37, 38, 39) solidaire du carter par l'intermédiaire de plusieurs ressorts de flexion (42) répartis sur la périphérie.

25. Dispositif de guidage magnétique selon la revendication 24, **caractérisé en ce que** les ressorts de flexion (42) font chacun partie d'une cage (35, 36) qui relie les extrémités des ressorts de flexion (42) par l'intermédiaire de bagues de cage (40, 41).

26. Dispositif de guidage magnétique selon la revendication 25, **caractérisé en ce que** la cage (35, 36) entoure dans chaque cas les stators de palier radial (19 à 22).

27. Dispositif de guidage magnétique selon l'une des revendications 22 à 26, **caractérisé en ce que** le ou les stator(s) de palier radial (19 à 22) s'appuient par l'intermédiaire d'au moins un élément amortisseur (43, 44) sur la partie (37, 38, 39) solidaire du carter.

28. Dispositif de guidage magnétique selon la revendication 27, **caractérisé en ce que** l'élément amortisseur (43, 44) est réalisé en forme d'anneau et coaxialement à l'élément (2).

29. Dispositif de guidage magnétique selon la revendication 27 ou 28, **caractérisé en ce que** les éléments amortisseurs (43, 44) sont réalisés sous forme de films de liquide.

30. Dispositif de guidage magnétique selon la revendication 29, **caractérisé en ce que** les films de liquide (43, 44) contiennent des particules magnétiques ou magnétisables et sont sollicités magnétiquement par un aimant permanent (45, 46) sur au moins un côté.

31. Dispositif de guidage magnétique selon la revendication 30, **caractérisé en ce que** les aimants permanents (45, 46) font partie du ou des paliers radiaux (5, 6).
